# EUROPÄISCHE PATENTANMELDUNG

(11) **EP 4 298 878 A1**
(43) Veröffentlichungstag der Anmeldung: **03.01.2024**
(21) Anmeldenummer: 23182616.5
(22) Anmeldetag: 30.06.2023
(51) Int. Cl.: A01B 33/10, A01B 33/06

(54) **KREISELEGGE**

(30) Priorität: 30.06.2022 AT 1352022
(71) Anmelder: PIT Products GmbH, 1140 Wien (AT)
(72) Erfinder: Glassner, Rudolf, 4400 Steyr (AT)
(74) Vertreter: Wildhack & Jellinek Patentanwälte

(57) **Zusammenfassung**

Eine Kreiselegge mit einem Räderkasten, in dem eine Anzahl auf abwärts gerichteten Wellen sitzende Zahnräder gelagert sin, welche Wellen nach unten aus dem Räderkasten herausragen und Zinkenkreisel tragen. Um einer Verstopfung entgegenzuwirken und die Antriebsleistung zu minimieren, reichen die Wellen (4) bis unter die Bodenoberfläche (5) und tragen an ihren unteren Enden Zinkenkreisel (7), welche Zinkenkreisel abwärts und aufwärts ragende Zinken (9,10) aufweisen. Die Zinken (9,10) sind abgewinkelte Bleche, wovon zweierlei für beide Drehrichtungen ausreichen.

## Beschreibung

Die Erfindung betrifft eine Kreiselegge mit einem Räderkasten, in dem eine Anzahl auf vertikalen Wellen sitzende Zahnräder gelagert sind, welche Wellen nach unten aus dem Räderkasten herausragen und Zinkenkreisel tragen.

Kreiseleggen werden zur Zerkleinerung des Bodens und pflanzlicher Überreste, etwa vor dem Einbringen einer Saat eingesetzt. Sie sollen bei möglichst geringer Antriebsleistung den Boden in ausreichender Tiefe durchmischen.

Aus der DE 198 54 686 A1 ist eine Kreiselegge bekannt, deren Zinken an einem direkt unter dem Räderkasten - also weit über dem Boden - angeordneten Flansch befestigt und zusätzlich mit auswärts weisenden Horizontalzinken versehen sind.

Besonders nachteilig ist diese Anordnung, weil sich vor den Flanschen leicht ein Erdstau bildet, der zu einer Verstopfung auf der Anlaufseite und der Durchgangsräume zwischen den Flanschen mit als Folge Überlastung des Zugfahrzeuges führt. Weiters müssen die Zinken für ausreichende Arbeitstiefe sehr lang sein. Sie müssen daher stark dimensioniert sein und sind wegen der Horizontalzinken in der Fertigung aufwendige Verschleißteile.

Es ist Ziel der Erfindung, diese Nachteile zu beheben. Das wird mit den Merkmalen des Kennzeichnungsteiles des Anspruch 1 erreicht. Die bis unter die Bodenoberfläche reichenden Wellen tragen an Ihren unteren Enden Zinkenkreisel, welche Zinkenkreisel abwärts und aufwärts ragende Zinken aufweisen. Dadurch werden hohe und breite Durchgangsräume zwischen den nackten Wellen geschaffen. Die Flansche befinden sich unter der Oberfläche des Bodens und die vier nach oben und unten reichenden Zinken brauchen nur halb so lange sein. Weil die vertikalen Zinken naturgemäß auf einem Radius außerhalb der Welle sind, sind auf einfachste Weise auch als horizontale Zinken wirkende Teile geschaffen.

In einer bevorzugten Ausführung sind die Zinken abgewinkelten Blechteile, welche Zinken jeweils einen horizontalen und einen vertikalen Schenkel bilden und so mit dem Ende der Welle verbunden sind, dass die vertikalen Schenkel benachbarter Zinken abwechselnd abwärts und aufwärts ragen. Die Zinken sind so einfache und dünne und leichte Teile, daher ist weniger Antriebskraft erforderlich. Sie sind einzeln austauschbar.

Eine weitere Verringerung der Antriebskraft und bessere zerkleinernde Wirkung wird erreicht, wenn die vertikalen Schenkel im Drehsinn vorne eine rückwärts geneigte Schneidkante haben und wenn alle im jeweiligen Drehsinn vorderen Kanten beider Schenkel Schneiden sind. Der leicht einwärts gebogene hintere Teil des vertikalen Schenkels wirkt der Bildung eines Pfropfens im Inneren des Zinkenkreisels entgegen.

Eine besonders einfache Befestigung und Austauschbarkeit der Zinken wird dadurch erreicht, dass sie mit jeweils einer einzigen Schraube an der ebenen Flanschplatte befestigt sind, wobei ihr Kanten aneinander anliegen. Bei vier Zinken ergibt das rechte Winkel.

Insgesamt wird durch die erfindungsgemäße Gestaltung eine besonders leichte und kraftsparende Kreiselegge geschaffen, die einfach in der Fertigung und Wartung ist. Für beide Drehrichtungen benachbarter Zinkenkreisel wird mit nur zweierlei Zinken das Auslangen gefunden: Die bei Rechtsdrehung aufwärts gebogenen Zinken sind bei Linksdrehung mit dem vertikalen Schenkel abwärts montiert.

Im Folgenden wird die Erfindung anhand einer Ausführungsform beschrieben und erläutert. Es stellen dar:
Fig. 1 eine Frontansicht der Kreiselegge,
Fig. 2 eine Draufsicht auf dieselbe,
Fig. 3 eine Frontansicht eines Zinkenkreisels,
Fig. 4 eine Ansicht des Zinkenkreisels von unten,
Fig. 5 eine axonometrische Ansicht des Zinkenkreisels,
Fig. 6 ein Herstellungsdetail zu Fig. 5.

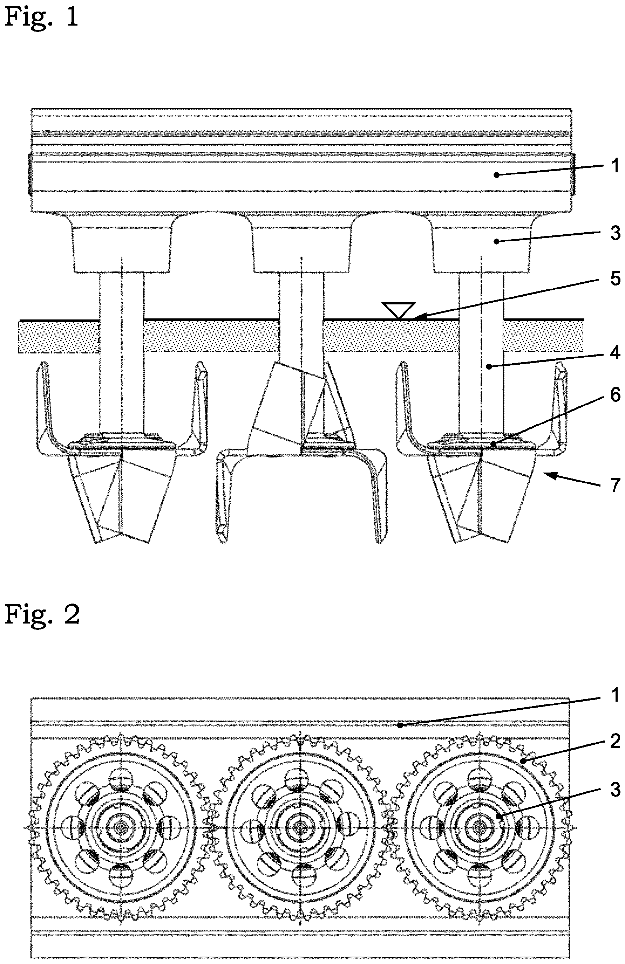

In **Fig. 1** ist ein Räderkasten mit 1 bezeichnet, in **Fig. 2** sind bei abgenommenem Lagerdeckel miteinander kämmende Zahnräder 2 zu sehen. Aus den unteren Lagerungen 3 ragen Wellen 4, die abwechselnd gegensinnig rotieren. Die Wellen 4 sind so lange, dass sie in den Erdboden 5 eintauchen und an ihren unteren Enden Flanschplatten 6 für die Anbringung jeweils eines Zinkenkreisels 7 haben, der aus vier abwechselnd aufwärts und abwärts gerichteten Zinken besteht.

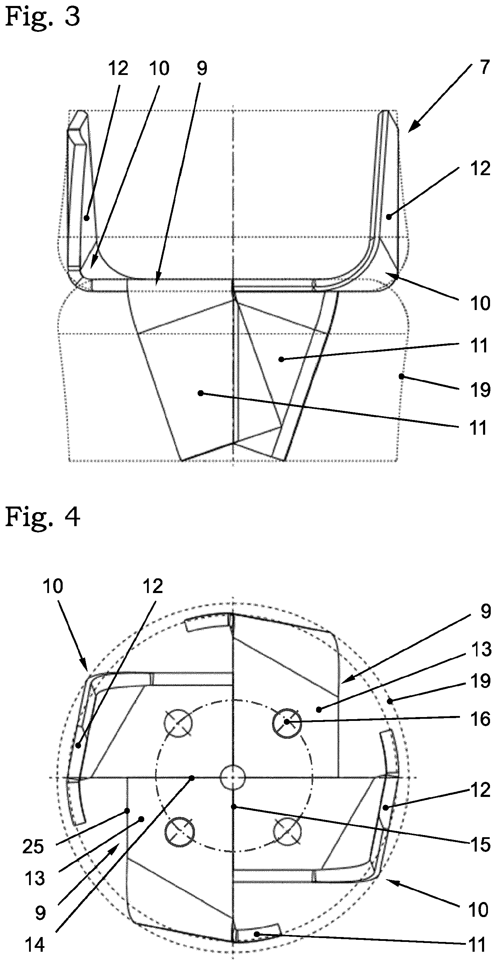

**Fig. 3** und **4** zeigen einen der Zinkenkreisel 7, bestehend aus vier abgewinkelten Blechstreifen, die die Zinken 9,10 bilden, 9 die mit abwärts gerichtetem Schenkel 11 und 10 die mit aufwärts gerichtetem vertikalen Schenkel 12. Ihre horizontalen Schenkel 13 haben eine Stirnkante 14 und eine hintere Seitenkante 15, die einen rechten Winkel einschließen, und jeweils eine Bohrung 16 für die Schraubenverbindung mit dem Flansch 6. Da die Kanten an den entsprechenden Kanten der benachbarten Zinken anliegen, genügt zur positionsgenauen Verbindung jeweils eine einzige (nicht dargestellte) Schraube. Sie könnten aber auch ver- und angeschweißt sein. Die bei Rotation gebildete Kontur 19 ist dünn strichliert eingezeichnet.

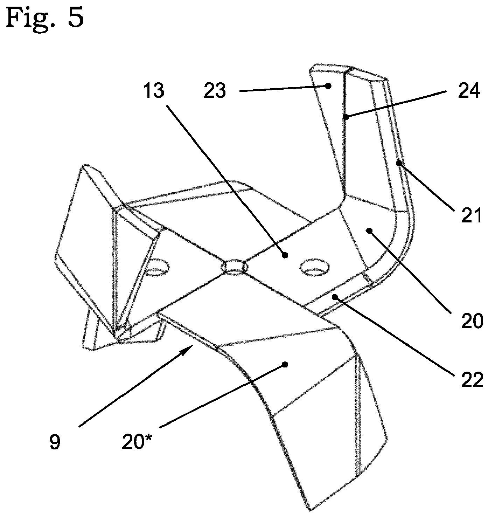

In **Fig. 5** ist die Form der abgewinkelten Zinken gut erkennbar. Der horizontale Schenkel 13 geht über eine Biegezone 20 in den vertikalen Schenkel 12 über. Die Biegezone 20 ist konisch, ergibt aber einen rechten Winkel. Dadurch ist die Schneidkante 21 des vertikalen Schenkels 12 rückwärts geneigt. Sie geht über die Biegezone 20 in eine Schneide 22 des horizontalen Schenkels 13 über. Die stumpfe hintere Kante 23 ist mittels einer axial verlaufenden Abkantung 24 geringfügig einwärts geneigt, um innerhalb der Kontur 19 zu bleiben.

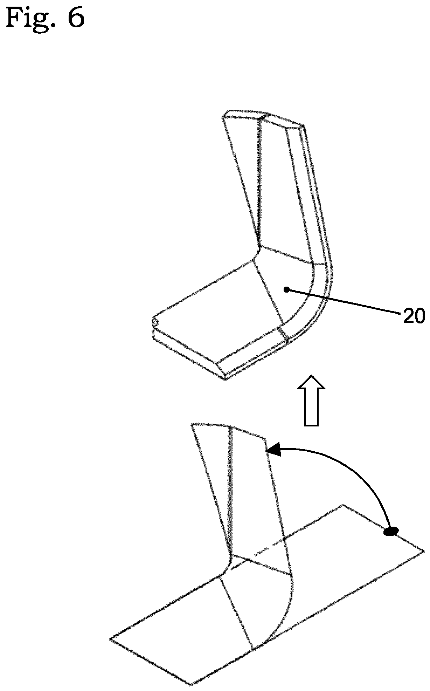

**Fig. 6** zeigt, wie ein Zinken aus einem ebenen Blechstreifen, wobei durch die konische Biegezone 22 die abweisende Schneidkante 21 hergestellt wird.

Soweit der Zinken 10 mit nach oben reichendem Schenkel 12. Der Zinken 9 mit abwärts gerichtetem Schenkel 11 unterscheidet sich davon nur durch die gespiegelte Biegezone 20*. Es gibt also 2 verschiedene Zinken.

Für einen benachbarten Zinkenkreisel mit entgegengesetztem Drehsinn werden dieselben Zinken verwendet, nur der mit nach oben gerichtetem vertikalen Schenkel bei gegensinniger Rotation so, dass dieser nach unten gerichtet ist. Es können also dieselben zweierlei Zinken verwendet werden, nur andersrum an der Nabe 6 befestigt.

## Patentansprüche

1. Kreiselegge mit einem Räderkasten, in dem eine Anzahl auf abwärts gerichteten Wellen sitzende Zahnräder gelagert sind, welche Wellen nach unten aus dem Räderkasten herausragen und Zinkenkreisel tragen, **dadurch gekennzeichnet, dass** die Wellen (4) bis unter die Bodenoberfläche (5) reichen und an Ihren unteren Enden Zinkenkreisel (7) tragen, welche Zinkenkreisel abwärts und aufwärts ragende Zinken (9,10) aufweisen.

2. Kreiselegge nach Anspruch 1, **dadurch gekennzeichnet, dass** die Zinkenkreisel (7) aus einer Anzahl aus abgewinkelten Blechteilen bestehenden Zinken (9,10) gebildet sind, welche Zinken jeweils einen horizontalen (13) und einen vertikalen (12) Schenkel (12,13) bilden und so mit dem Ende der Welle (3) verbunden sind, dass die vertikalen Schenkel (11,12) benachbarter Zinken (9,10) in Umfangsrichtung abwechselnd abwärts und aufwärts ragen.

3. Kreiselegge nach Anspruch 2, **dadurch gekennzeichnet, dass** die abgewinkelten vertikalen Schenkel (11,12) im Drehsinn vorne eine rückwärts geneigte Schneidkante (21) haben und hinten einen leicht einwärts gebogenen Teil (22) haben.

4. Kreiselegge nach Anspruch 2, **dadurch gekennzeichnet, dass** die im jeweiligen Drehsinn vorderen Kanten (21,22) beider Schenkel (12,13) Schneiden sind.

5. Kreiselegge nach Anspruch 2, **dadurch gekennzeichnet, dass** am unteren Ende der Wellen (3) Flanschplatten (6) mit einer achsnormalen Auflagefläche befestigt sind, an welchen die Zinken (9,10) mittels Schrauben befestigt sind.

6. Kreiselegge nach Anspruch 1, **dadurch gekennzeichnet, dass** die horizontalen Schenkel (13) der Zinken (9,10) an ihrem der Abwinkelung abgewandten Ende eine Stirnkante (14) und Seitenkanten (15) bilden, wovon eine mit der Stirnkante (14) einen rechten Winkel einschließt, welche Seitenkante (15) und Stirnkante (14) an entsprechenden Kanten (14,15) benachbarter Zinken (9,10) anliegen, wobei die andere Seitenkante (25) eine Schneide bildet.
